Europäisches Patentamt

European Patent Office

Office européen des brevets

(11) Veröffentlichungsnummer: **0 415 140 A1**

# (12) EUROPÄISCHE PATENTANMELDUNG

(21) Anmeldenummer: 90115239.7

(22) Anmeldetag: 08.08.90

(51) Int. Cl.⁵: **F16J 15/10, B29C 47/00**

(30) Priorität: 31.08.89 DE 3928961

(43) Veröffentlichungstag der Anmeldung:
06.03.91 Patentblatt 91/10

(84) Benannte Vertragsstaaten:
BE DE FR GB IT NL

(71) Anmelder: W.L. Gore & Associates GmbH
Hermann-Oberth-Strasse 22
W-8011 Putzbrunn(DE)

(72) Erfinder: Gutsmiedl, Heinrich
Soinweg 11
W-8201 Flintsbach(DE)
Erfinder: Nibler, Wulf
Kybergstrasse 51b
W-8024 Deisenhofen(DE)
Erfinder: Tisch, Werner
Josef-Knappich-Strasse 4
W-8011 Putzbrunn(DE)

(74) Vertreter: Klunker . Schmitt-Nilson . Hirsch
Winzererstrasse 106
W-8000 München 40(DE)

(54) Verfahren zur Herstellung einer Dichtung.

(57) Beschrieben wird ein Verfahren zur Herstellung einer Dichtung aus mikroporösem PTFE zum Einbau zwischen plane Dichtflächen. Als Ausgangsmaterial dient ein extrudiertes, gestrecktes Rechteckprofil, das breiter als hoch ist. Durch Vorpressung des Profils quer zur Richtung der Schraubenkräfte wird eine vorgepreßte Dichtung erzeugt, deren Breite verglichen mit der Breite des Extrudats kleiner ist. Bei einer derartig vorgepreßten Dichtung wird der Endzustand nach Aufbringung der Schraubenkräfte in kurzester Zeit erreicht.

Fig. 1a

EP 0 415 140 A1

## VERFAHREN ZUR HERSTELLUNG EINER DICHTUNG

Verfahren zur Herstellung einer Dichtung aus mikroporösem PTFE zum Einbau zwischen plane Dichtflächen, wobei das Ausgangsmaterial zunächst zu einem Profil extrudiert, gestreckt und das gestreckte Profil dann vorgepreßt wird und die Dichtung so eingebaut wird, daß bei Beaufschlagung der Dichtflächen mit Druck eine Reduzierung der Höhe der Dichtung erfolgt.

Es sind bereits Dichtungen bekannt, bei deren Herstellung von einem extrudierten und gestreckten Dichtungsprofil ausgegangen wird. Vorzugsweise sind die gestreckten Profile höher als breit, wobei als Höhe diejenige Dimension definiert wird, die in Richtung der Schraubenkräfte liegt.

Ein bekanntes Verfahren geht von einem extrudierten, gestreckten Rechteckprofil aus, dessen Höhe größer ist als dessen Breite. Durch die Vorpressung wird eine Umkehrung der Rechteckgeometrie in dem Sinne erreicht, daß die fertige, vorgepreßte Dichtung eine größere Breite aufweist als Höhe. Eine derart vorgepreßte Dichtung hat gegenüber einer nicht vorgepreßten Dichtung den Vorteil, daß ihr weiteres Setzverhalten gering ist. Bei größeren Dichtflächen-Unebenheiten, die fertigungs- oder auch montagebedingt sein können, besteht jedoch die Gefahr einer weiteren plastischen Verformung (Kaltfluß), die vor allem bei höheren Innendrücken zu Leckagen führen kann. Dieser Nachteil wurde bei einem Dichtungsmaterial nicht auftreten, das von vornherein so vorgepreßt ist, daß Umorientierungen und Verlagerungen im Material auf ein Minimum reduziert sind.

Die bekannte Dichtung ist auch insoweit nachteilig, als sie wegen ihrer viel größeren breite als Höhe ein Verlegen in engen Krümmungsradien nicht erlaubt. Zur Abdichtung schwächerer Flanschblätter großer Abmessungen ist es häufig erforderlich, die Dichtung in engen weit ausgezogenen Buchten zu verlegen, um die Wirklinie der Dichtung in die Wirklinie der Schraubenkraft zu bringen. Der Widerstand gegen eine derartige Verlegung in Radien hängt jedoch von der dritten Potenz der Breite der dichtung ab, so daß unter diesem Aspekt eine schmalere Dichtung vorteilhafter wäre.

Der Erfindung liegt die Aufgabe zugrunde, ausgehend von einer bekannten vorgepreßten Dichtung ein Herstellungsverfahren anzugeben, daß zu einer Dichtung führt, die bei Beaufschlagung mit den Schraubenkräften möglichst bald einen Endzustand erreicht, der als Gleichgewicht zwischen restdicke und Schraubenkraft definiet werden kann. Die Dichtung soll darüberhinaus leicht in engen Radien verlegbar sein.

Erfindungsgemäß wird diese Aufgabe dadurch gelöst, daß ausbehend von einem gestreckten PTFE-Profil größerer Breite als Höhe eine Vorpressung quer zur Richtung der Schraubenkräfte erfolgt. Beim Vorpressen in querrichtung erfolgt einen Art Faltung der internen mikroporösen Materialstruktur. Beim Aufbringen der Schraubenkräfte wird zunächst diese Faltung wieder rückgängig gemacht, d.h. die Dichtung erscheint relativ weich und kann sich den Unebenheiten der Dichtfläche hervorragend anpassen. Nach dem relativ schnell erreichten Ausfalten ist der Endzustand des Dichtungsmaterials erreicht, d.h. weitere Neuorientierungen der Struktur treten nicht auf, vielmehr stellt sich ein Gleichgewicht zwischen Restdicke der Dichtung und den Schraubenkräften ein. Im Ergebnis wird der stabile Endzustand bei der erfindungsgemäßen Dichtung schneller erreicht als bei einer in bekannter Weise vorgepreßten Dichtung, bei der vom Beginn der Aufbringung der Schraubenkräfte an sofort weitere Orientierungen im Material geschaffen werden müssen.

Gemäß einer vorteilhaften Weiterbildung der Erfindung geht man von einem extrudierten und gestreckten Rechteckprofil aus, es ist aber auch möglich, von gestreckten Profilen auszugehen, deren Querschnitt die Form einer Ellipse, einer Raute, eines Trapezes oder einer konvexen Linse aufweisen. Vorzugsweise weist das vorzupressende Rechteckprofil eine größere Breite als Höhe auf, die Reduzierung der Breite beim Vorpressen kann bis zu 70% betragen.

Auch eine biaxiale Verpressung hat sich als vorteilhaft erwiesen. Die damit erreichte Geometrie erleichtert das Verlegen aufgrund geringerer Breite. Die Dichtung erreicht schnell den stabilen Endzustand und hat den zusätzlichen Vorteil, daß der Weg den die Schraubenkräfte überwinden müssen, reduziert wird.

Es ist vorteilhaft, wenn das Verhältnis von Breite zu Höhe des gestreckten Rechteckprofils größer als 1 und kleiner als 10 ist.

Das Dichtverhalten kann weiter durch die Beigabe von partikel- oder faserförmigen Fullstoften verbessert werden. Der Fullstoffanteil beträgt vorzugsweise zwischen 5 und 65 Gew.-%. Als Füllstoff kommen Kohlenstoff, insbesondere Graphit, Glasmaterial, Keramik oder Aramid in Frage.

Nachfolgend wird eine Ausführungsform der Erfindung anhand der beigefügten Zeichnung beschrieben. Darin zeigen:

Fig. 1a und b einen Querschnitt durch ein gestrecktes Extrudat vor und nach der in Breitenrichtung erfolgenden Vorpressung;

Fig. 2a, b und c Querschnitte mit einer schematisch angedeuteten Mikrostruktur bei Verpressung in Höhenrichtung, Breitenrichtung und biaxial, und

Fig. 3 ein Diagramm, das qualitativ das Fließverhalten einer in Höhenrichtung (Kurve A) und einer in Breitenrichtung (Kurve B) vorgepreßten Dichtung.

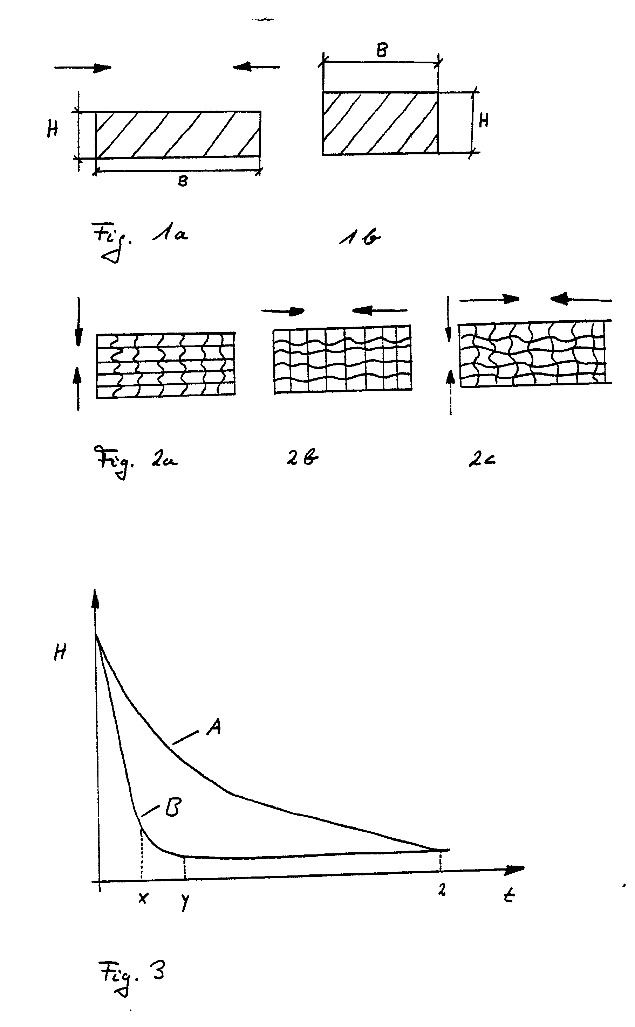

Fig. 1a zeigt den Querschnitt durch ein extrudiertes Rechteckprofil mit größerer Breite als Höhe, wie es bei dem Verfahren als Zwischenprodukt verwendet wird. Die Herstellung der mikroporösen und gereckten Profile ist bekannt und beispielsweise in der US-Patentschrift 3,664,915 beschrieben. Auf den Offenbarungsgehalt dieser Druckschrift wird ausdrücklich Bezug genommen.

Das in Fig. 1a gezeigte Profil wird sodann in Breitenrichtung vorgepreßt und dadurch zusammengeschoben, wobei die Breitenreduzierung bis zu 70% betragen kann.

Man kann auch von anderen, als Rechteckprofilen, ausgehen, beispielsweise von einer Rautenform, einer Ellipse oder einem trapezförmigen Querschnitt. Wichtig dabei ist lediglich, daß die größere Abmessung des Extrudats in Querrichtung liegt und in dieser Achse auch die Vorpressung erfolgt.

Beim Verpressen legen sich die Orientierungen faltenartig zusammen. Fig. 2a zeigt schematisch die Mikrostruktur einer in Höhenrichtung verpreßten Dichtung, Fig. 2b schematisch die Mikrostruktur einer in Querrichtung verpreßten Dichtung. Bei Aufbringen der Schraubenkräfte legen sich die Falten zunächst schnell aus (Anpassung), erst danach beginnt eine weitere Orientierung, der Endzustand, d.h. das Gleichgewicht zwischen Schraubenkräften und Restdicke der Dichtung stellt sich somit relativ schnell ein. Dieses Fließverhalten über der Zeitachse ist als Kurve B in Fig. 3 qualitativ angedeutet.

In dem Zeitintervall zwischen t = 0 und t = x findet die Anpassungsphase statt, in der sich die Falten schnell wieder auseinanderschieben und die Dichtung leicht fließt. Zwischen t = x und t = y findet eine kleine weitere Orientierung der Dichtung statt. Zu dem Zeitpunkt t = y ist die Vorverformung beendet und die Dichtung hat ihren stabilen Endzustand erreicht.

Eine nur in Höhenrichtung vorgepreßte Dichtung wird demgegenüber langsamer fließen und auch den Endzustand langsamer erreichen, da sich im Material von vornherein weitere Orientierungen bilden müssen. Das Dichtungsmaterial wird also auch nach Aufbringung einer bestimmten Schraubenkraft über längere Zeit weiter fließen, was, insbesondere bei hohen Innendrücken, zu Leckagen führen kann und bedeutet, daß die Schrauben öfter nachgezogen werden müssen. Das Fließverhalten einer nur in Höhenrichtung vorgepreßten Dichtung ist durch die Kurve A in Fig. 3 qualitativ dargestellt. Der stabile Endzustand ist erst bei t = z erreicht. In der Zeit zwischen t = 0 und t = z findet eine langsame Orientierung statt.

Es ist möglich, zusätzlich zum Vorverpressen in Breitenrichtung die Dichtung auch in Höhenrichtung vorzuverpressen.

Fig. 2c zeigt schematisch die Mikrostruktur einer biaxial verpreßten Dichtung.

## Ansprüche

1. Verfahren zur Herstellung einer Dichtung aus mikroporösem PTFE zum Einbau zwischen plane Dichtflächen, wobei das Ausgangsmaterial zunächst zu einem Profil extrudiert, gestreckt und das gestreckte Profil dann vorgepreßt wird und die Dichtung dann so eingebaut wird, daß bei Beaufschlagung der Dichtflächen mit Druck eine Reduzierung der Höhe der Dichtung erfolgt,
dadurch **gekennzeichnet**, daß das extrudierte gestreckte Profil breiter als hoch ist und die Vorpressung quer zur Richtung der Schraubenkräfte vorgenommen wird, so daß die Breite des vorgepreßten Profils kleiner wird als die Breite des gestreckten Extrudats.

2. Verfahren nach Anspruch 1,
dadurch **gekennzeichnet**, daß das extrudierte gestreckte Profil ein Rechteckprofil ist.

3. Verfahren nach Anspruch 1,
dadurch **gekennzeichnet**, daß die Verpressung zu einem Profil mit einer größeren Breite als Höhe führt.

4. Verfahren nach Anspruch 2 oder 3,
dadurch **gekennzeichnet**, daß die Reduzierung der Breite beim Vorpressen des Rechteckprofils bis zu 70% beträgt.

5. Verfahren nach einem oder mehreren der Ansprüche 1 bis 4,
dadurch **gekennzeichnet**, daß die Dichtung auch in Höhenrichtung vorgepreßt wird.

6. Verfahren nach einem der Ansprüche 1 bis 5,
dadurch **gekennzeichnet**, daß das Verhältnis von Breite zu Höhe des extrudierten, gestreckten Profils größer 1 und kleiner 10 ist.

7. Verfahren nach einem oder mehreren der Ansprüche 1 bis 6,
dadurch **gekennzeichnet**, daß der Dichtungswerkstoff einen partikel- oder faserförmigen Füllstoff enthält.

8. Verfahren nach Anspruch 7,
dadurch **gekennzeichnet**, daß der Füllstoffanteil zwischen 0,5 und 65 Gew.-% liegt.

9. Verfahren nach Anspruch 7 oder 8,
dadurch **gekennzeichnet**, daß der Füllstoff Kohlenstoff, insbesondere Graphit, Glasmaterial, Keramik oder Aramid ist.

Fig. 1a          1b

Fig. 2a          2b          2c

Fig. 3

Europäisches
Patentamt

**EUROPÄISCHER
RECHERCHENBERICHT**

Nummer der Anmeldung

**EP 90 11 5239**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 143 338  (W.L. GORE & CO.)<br>* Zusammenfassung *<br>– – – | 1,2 | F 16 J 15/10<br>B 29 C 47/00 |
| A | EP-A-0 238 076  (ASAHI KASEI KOGYO K.K.)<br>* Seite 9, Zeile 52 - Seite 10, Zeile 4; Seite 11, Zeilen 21-26 *<br>– – – | 1 | |
| A,D | US-A-3 664 915  (W.L. GORE)<br>* Zusammenfassung *<br>– – – | 1 | |
| A,P | EP-A-0 344 403  (W.L. GORE)<br>* Zusammenfassung *<br>– – – – – | 7-9 | |

|  |
|---|
| RECHERCHIERTE SACHGEBIETE (Int. Cl.5) |
| B 29 C 47/00<br>F 16 J 15/00 |

Der vorliegende Recherchenbericht wurde für alle Patentansprüche erstellt

| Recherchenort | Abschlußdatum der Recherche | Prüfer |
|---|---|---|
| Den Haag | 29 November 90 | STIERMAN E.J. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus anderen Gründen angeführtes Dokument
 
& : Mitglied der gleichen Patentfamilie,
übereinstimmendes Dokument